Europäisches Patentamt

European Patent Office

Office européen des brevets

(11) Numéro de publication: **0 424 187 A1**

# DEMANDE DE BREVET EUROPEEN

(21) Numéro de dépôt: **90402481.7**

(51) Int. Cl.5: **B01J 29/02**

(22) Date de dépôt: **10.09.90**

(30) Priorité: **18.09.89 FR 8912189**

(43) Date de publication de la demande:
**24.04.91 Bulletin 91/17**

(84) Etats contractants désignés:
**AT BE CH DE DK ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Popa, Jean-Michel**
**2, rue Roger Breton**
**F-93700 - Drancy(FR)**

(74) Mandataire: **Dutruc-Rosset, Marie-Claude et al**
**RHONE-POULENC CHIMIE Service Brevets**
**Chimie 25, Quai Paul Doumer**
**F-92408 Courbevoie Cédex(FR)**

(54) Procédé de préparation d'argiles pontées et argiles pontées obtenues selon ce procédé.

(57) La présente invention a pour objet un procédé de préparation d'argiles pontées et les argiles pontées préparées selon ledit procédé.

La caractéristique du procédé de l'invention est de traiter thermiquement un milieu réactionnel comprenant l'argile en suspension aqueuse, au moins un sel d'un cation M et un composé qui fournit des ions $OH^-$ par décomposition hydrothermique dans les conditions réactionnelles, puis à séparer le produit obtenu.

Le procédé de l'invention s'applique particulièrement bien dans le cas du pontage aluminique.

# PROCEDE DE PREPARATION D'ARGILES PONTEES ET ARGILES PONTEES OBTENUES SELON CE PROCEDE

La présente invention a pour objet un procédé de préparation d'argiles pontées et les argiles pontées préparées selon ledit procédé.

Certaines argiles ont une structure à réseau expansible. En effet, celles-ci ont la propriété de pouvoir absorber de l'eau, notamment entre les différents feuillets qui les composent. Ont cette propriété, les argiles du groupe des smectites et des vermiculites. La structure de ces argiles peut être décrite, d'une manière simplifiée, comme une structure en feuillets à couche triple d'une épaisseur d'environ 1 nm, comportant deux couches de tétraèdres $SiO_4$ séparées par une couche d'octaèdres $MX_6$, M pouvant être un ion trivalent, par exemple $Al^{3+}$ dans le cas des argiles dioctaédriques ou un ion divalent, par exemple $Mg^{2+}$ dans le cas des argiles trioctaédriques ; X représente un atome d'oxygène, un groupement hydroxyle OH ou un atome de fluor F.

Les atomes de silicium des tétraèdres peuvent être remplacés en partie par des atomes d'aluminium et les atomes d'aluminium et de magnésium des octaèdres peuvent être substitués en particulier respectivement par des atomes de magnésium ou de fer et de lithium.

En raison du caractère expansible des argiles, on les a utilisées dans le domaine de la catalyse, où l'on recherche la plus grande surface accessible aux réactifs.

Toutefois, l'intérêt des argiles non pontées comme catalyseurs ou supports de catalyseurs est limité à la catalyse en phase liquide car les argiles expansées subissent une dessication dès la température d'ébullition du solvant. Il en résulte une perte de leur caractère expansé et, par là-même, de leur surface inter-feuillets accessible.

On a donc cherché à expanser les argiles selon une autre technique permettant leur emploi comme catalyseurs ou supports de catalyseurs également en phase gazeuse.

On a ainsi réussi à expanser les argiles en introduisant entre les feuillets d'argiles une espèce minérale créant ainsi des piliers ou des ponts. On désigne par "argiles pontées" les argiles ainsi obtenues.

Une technique bien connue consiste à effectuer le pontage par des oligomères d'un hydroxyde d'un métal, notamment d'aluminium.

Généralement, il est habituel de réaliser le pontage des argiles selon un procédé en trois étapes :
- fabrication du pilier aluminique $Al_{13}$ de formule $[Al_{13} O_4 (OH)_{24+x} (H_2O)_n](7-x)+$ (avec x compris entre 0 et 4 et n variant le plus souvent entre 8 et 12) à partir d'un sel d'aluminium et d'une base,
- mélange de la solution contenant la source $Al_{13}$ avec la suspension aqueuse d'argile,
- lavage ou dialyse du produit final.

On peut citer, notamment, FR-A 2 512 043 qui décrit un procédé de ce type.

La présente invention vise à proposer un nouveau procédé de préparation d'argiles pontées présentant par rapport au procédé précité, l'avantage précisé ci-après de comporter une étape en moins.

Précisément, l'invention a pour objet un procédé de préparation d'une argile pontée caractérisé par le fait qu'il consiste à traiter thermiquement un milieu réactionnel comprenant l'argile en suspension aqueuse, au moins un sel d'un cation M et un composé qui fournit des ions $OH^-$ par décomposition hydrothermique dans les conditions réactionnelles, puis à séparer le produit obtenu.

La caractéristique du procédé de l'invention est de mettre en oeuvre lors du pontage de l'argile, un composé qui se décompose dans les conditions de température de la réaction selon une réaction du type (1) :
$$AB + H_2O \rightarrow AH + B^+ + OH^- \qquad (1)$$

Comme composé mis en oeuvre préférentiellement, on fait appel à l'urée qui se décompose à chaud selon les réactions :
$$O=C-(NH_2)_2 + H_2O \rightleftharpoons CO_2 + 2NH_3 \qquad (2)$$
et
$$2NH_3 + 2H_2 \rightleftharpoons 2NH_4^+ + 2OH^- \qquad (3)$$

Il a maintenant été trouvé selon l'invention que le choix de l'urée ou tout autre équivalent permettait lors de l'élévation de température de former in situ le pilier de pontage et ainsi permettait de se dispenser de sa préparation préalable tel que décrit dans l'état de la technique.

Dans l'exposé qui suit de la présente invention, on désignera par "composé AB", le composé apportant des ions $OH^-$ par décomposition hydrothermique.

Le procédé de l'invention convient à toutes les argiles d'origine naturelle ou synthétique dès lors qu'elles présentent une structure gonflante.

Les argiles préférées appartiennent aux groupes désignés sous le nom de smectites. A titre d'exemples, on peut citer :
la montmorillonite $[Al_{1,67} Mg_{0,33} (Na_{0,33})]Si_4 O_{10} - (OH)_2$
la beidellite $Al_2 [Al_{0,33} (Na_{0,33})Si_{3,67}]O_{10} (OH)_2$
l'hectorite $[Mg_{2,67} Li_{0,33} (Na_{0,33})]Si_4 O_{10} (OH)_2$

Les formules sont données à titre indicatif et sans caractère limitatif.

On peut également faire appel à une argile de type vermiculite.

Une variante préférée du procédé de l'invention est de mettre en oeuvre une argile ayant subi un traitement consistant à échanger les cations calcium contenus dans l'argile par des cations sodium. Ce traitement est connu et a pour effet d'améliorer le gonflement de l'argile. On précise que, généralement, on met en contact l'argile avec une solution aqueuse d'un sel de sodium, de préférence le chlorure de sodium.

La quantité de sel de sodium est le plus souvent excédentaire par rapport à la capacité d'échange de l'argile. L'excès de sel de sodium peut être éliminé par lavage à l'eau de l'argile ainsi modifiée.

Comme mentionné précédemment, le procédé de l'invention est caractérisé par la mise en oeuvre du composé (AB).

A titre d'exemples de composés (AB) convenant tout-à-fait bien à la mise en oeuvre du procédé de l'invention, on peut mentionner l'urée mais aussi tout autre composé qui se comporte comme l'urée. A titre d'exemples, on peut citer les urées substituées, la thiourée et les thiourées substituées, le cyanamide, les cyanamides substitués, l'hexaméthylène tétramine, la mélamine qui peuvent être utilisés seuls ou en mélange.

Les urées substituées et les thiourées substituées sont respectivement des urées et thiourées substituées à l'azote par un, deux, trois ou quatre radicaux aliphatiques saturés ou insaturés et/ou aromatiques.

Comme exemples de radicaux, on peut citer plus particulièrement les radicaux alcoyle ayant de 1 à 4 atomes de carbone, le radical allyle et/ou le radical phényle.

On donne ci-après des exemples d'urées et thiourées substituées convenant à l'invention : méthylurée ; diméthylurée symétrique ; diméthylurée dissymétrique ; triméthylurée ; tétraméthylurée ; éthylurée ; N-méthyl N′-éthylurée ; diéthylurée symétrique ; diéthylurée dissymétrique ; triéthylurée ; tétra-éthylurée ; n-proplyurée ; di-n-propylurée symétrique ; tétra-n-propylurée ; n-butylurée ; di-n-amylurée symétrique ; allylurée ; diallylurée symétrique ; diallylurée dissymétrique ; phénylurée ; N-méthyl N′-phénylurée ; N-méthyl N-phényl urée ; N-éthyl N′-phénylurée ; N-éthyl N-phényl urée ; NN-diméthyl N′-phénylurée ; diphénylurée symétrique ; méthyl-thio-urée ; diméthyl-thio-urée ; symétrique ; diméthyl-thio-urée dissymétrique ; triméthyl-thio-urée tétraméthyl-thio-urée ; éthyl-thio-urée ; N-méthyl N′-éthyl-thio-urée; NN-diméthyl N′-éthyl-thio-urée ; diéthyl-thio-urée symétrique ; diéthyl-thio-urée dissymétrique ; triéthyl-thio-urée ; tétraéthyl-thio-urée ; n-propyl-thio-urée ; N-méthyl N′-n-propyl-thio-urée ; N-éthyl N′-n-propyl-thio-urée; di-n-propyl-thio-urée ; symétrique di-n-propyl-thio-urée dissymétrique ; N-éthyl NN′-di-n-propyl-thio-urée ; n-Butyl-thio-urée ; i-Butyl-thio-urée ; d-sec.Butyl-thio-urée ; tert.Butyl-thio-urée ; allyl-thio-urée ; N-méthyl N′-allyl-thio-urée ; NN-diméthyl N′-allyl-thio-urée ; N-éthyl N′-allyl-thio-urée ; NN-diéthyl N′-allyl-thio-urée ; diallyl-thio-urée symétrique ; phényl-thio-urée ; diphényl-thio-urée symétrique.

Les cyanamides substitués sont des cyanamides substitués à l'azote par un ou deux radicaux aliphatiques et/ou aromatiques tels que précédemment définis.

Comme exemples de cyanamides substitués, on peut citer notamment les composés suivants : méthylcyanamide ; diméthylcyanamide ; éthylcyanamide ; diéthylcyanamide ; di-n-propylcyanamide ; di-n-butylcyanamide ; allylcyanamide ; diallylcyanamide ; phénylcyanamide ; diphénylcyanamide.

Selon l'invention, on met en oeuvre un sel d'un cation M. Le cation M est le cation qui intervient dans le pilier de pontage entre les feuillets.

Conformément à l'invention, on entend par cation M, tout cation qui a la propriété de s'hydrolyser dans une gamme de pH allant de 3,0 à 10,0 et de préférence, de 4,0 à 8,0.

A titre de cations M, on fait appel préférentiellement aux cations trivalents et, plus particulièrement, à l'aluminium, au chrome, au fer ou leur mélange. Il est également possible d'adjoindre à ces cations trivalents, une quantité minoritaire d'un cation bivalent ayant la propriété de précipiter dans la même gamme de pH tel que précisé.

Par quantité minoritaire, on entend une quantité représentant moins de 20 % environ, du poids total de mélange de cations. Comme exemples de cations bivalents, on peut citer le cobalt, le nickel, le cuivre, le zinc, etc...

En ce qui concerne la nature du sel, on peut faire appel à tout sel soluble du cation M. On le met en oeuvre généralement sous forme de nitrate ou de chlorure.

A titre de sels de cations métalliques préférés, on choisit le chlorure d'aluminium et/ou de chrome, le nitrate d'aluminium et/ou de chrome. Encore plus préférentiellement, on choisit le chlorure d'aluminium ou le nitrate d'aluminium.

Le sel peut être introduit dans le procédé de l'invention, soit sous forme solide, soit sous forme de solution aqueuse.

Dans le procédé de l'invention, intervient un autre réactif, à savoir le composé (AB). Le composé (AB) peut être introduit dans le milieu réactionnel sous forme solide ou aqueuse.

Dans la première étape du procédé de l'invention, on réalise le mélange des différents réactifs. L'ordre d'introduction des réactifs n'est pas critique.

Selon une première variante, on peut mettre l'argile en suspension aqueuse, ajouter la solution aqueuse d'au moins un sel de cation M puis la solution aqueuse du composé (AB) ou inversement.

Selon une deuxième variante, on peut mélanger simultanément les trois réactifs.

Selon une troisième variante, on peut également introduire la poudre d'argile dans une solution aqueuse d'au moins un sel de cation M et du composé (AB).

L'opération de préparation de mélange se fait, de préférence, sous agitation.

La concentration de l'argile dans le milieu réactionnel est choisie la plus élevée possible tout en maintenant des conditions de manipulation aisées.

Ladite concentration peut être comprise, par exemple, entre 0,1 g/l et 20 g/l.

La concentration du composé (AB) dans le milieu réactionnel est choisie avantageusement entre $10^{-3}$ et 2 moles/litre.

Pour ce qui est de la proportion des différents réactifs, on définit un rapport pondéral entre le poids de sel de cation M exprimé en poids d'oxyde mis en oeuvre et le poids de l'argile mise en suspension choisi préférentiellement entre 0,1 et 6,0 et, de préférence, entre 1,0 et 5,0.

En ce qui concerne la quantité du composé (AB) engagée, elle est déterminée de telle sorte que le rapport molaire entre le nombre de moles du composé (AB) et le nombre de moles de cation M est compris de préférence entre 0,5 et 3,0.

Le procédé de l'invention consiste à effectuer le mélange des différents réactifs précités, généralement à la température ambiante (le plus souvent entre 15°C et 25°C), puis à chauffer le milieu réactionnel à une température comprise entre 80°C et 180°C, de préférence entre 80°C et 120°C. Ce chauffage provoque la décomposition du composé (AB) et permet ainsi la formation des piliers inter-feuillets.

Il est plus aisé de travailler à la température de reflux qui est facile à contrôler et à reproduire.

L'opération présente une durée très variable allant par exemple de 1 heure à environ 10 heures et, de préférence, entre 3 et 8 heures. Il est préférable de maintenir le milieu réactionnel sous agitation tout au cours du procédé de l'invention.

A la fin du traitement, on récupère l'argile selon les techniques classiques de séparation solide-liquide telles que, par exemple, filtration ou centrifugation.

Il est possible alors de soumettre l'argile pontée à une opération d'élimination des anions. Celle-ci peut s'avérer nécessaire car on constate parfois une amélioration de la stabilité thermique du pontage.

Afin de savoir si cette opération est souhaitable, l'homme de métier peut aisément le déterminer en effectuant deux essais comparatifs, l'un avec l'opération d'élimination des anions, l'autre sans celle-ci. Ladite opération ne sera pas retenue si l'on constate une diminution de l'espacement basal. On définit l'espacement basal comme la somme de l'épaisseur d'un feuillet et de l'espacement interfoliaire, c'est-à-dire l'espacement entre deux feuillets.

D'une manière pratique, l'élimination des anions peut être conduite par lavage, de préférence à l'eau, ou par dialyse selon une technique bien connue décrite notamment dans FR-A 2 512 043.

Dans une étape suivante, on soumet l'argile à un traitement thermique. Elle peut être soumise directement à une opération de calcination ou bien subir un séchage préalable.

Les conditions de séchage peuvent varier dans de larges limites. C'est ainsi que la température peut être choisie entre 80°C et 120°C, de préférence aux environs de 100°C. La durée de séchage est choisie, de préférence, entre 2 et 48 heures. L'opération de séchage peut être faite à l'air ou sous pression réduite, par exemple, entre 1 et 100 mm de mercure (133,322 Pa et 13332,2 Pa).

Une autre variante de l'invention consiste à soumettre l'argile séparée à un traitement de lyophilisation. Il est obtenu par une congelation brusque du produit à une température située, de préférence, entre - 10°C et - 50°C suivie par une sublimation sous pression réduite ladite pression n'étant pas critique et choisie de préférence entre 10 et 0,5 atmosphère.

Selon la dernière étape du procédé, on soumet le produit éventuellement séché, à une calcination à une température choisie entre 300°C et 800°C, mais de préférence, entre 350°C et 600°C. Elle dure environ de 1 à 6 heures et, de préférence, environ 2 heures.

Les argiles préparées selon le procédé de l'invention présentent un espacement basal variant par exemple entre 1, 4 et 2,0 nm dans le cas d'un pontage aluminique.

Elles présentent une bonne stabilité thermique et sont donc parfaitement adaptées à des applications dans le domaine de la catalyse tel que le cracking catalytique des hydrocarbures paraffiniques ou l'isomérisation des hydrocarbures paraffiniques ou d'oléfines.

On donne, ci-après, des exemples de réalisation du procédé de l'invention qui ne présentent aucun caractère limitatif.

### EXEMPLE 1

1 - Dans cet exemple, on met en oeuvre une argile de type montmorillonite provenant du WYOMING et appelée bentonite VOLCLAY.

On prépare une suspension aqueuse à 20 g/l de ladite argile que l'on agite violemment et on laisse décanter pendant 24 heures.

Ensuite, on fait un prélèvement de la fraction granulométrique à 2 $\mu$m et l'on obtient une suspension aqueuse d'argile dénommée A.

2 - Dans l'étape suivante, on effectue un traitement sodique. A cet effet, on ajoute à la suspension A du chlorure de sodium en excès par rapport à la capacité d'échange de l'argile, soit 200 milliéquivalents de sodium pour 100 g d'argile.

La suspension est agitée pendant 1 heure à température ambiante (22°C).

On effectue alors une filtration sur verre fritté n° 4.

On répète l'opération de traitement au chlorure de sodium.

On procède à une deuxième filtration et on lave l'argile avec de l'eau distillée jusqu'à disparition complète des ions chlorure dans les eaux de lavage.

On met l'argile en suspension dans l'eau, à raison de 20 g/l. Il s'agit de la suspension B.

3 - On prépare une solution aqueuse de nitrate d'aluminium à 0,4 mole/litre d'$Al(NO_3)_3,9H_2O$.

On ajoute 1,2 litres de cette solution dans 0,85 litre de la suspension B.

On agite quelques minutes à température ambiante.

On obtient ainsi la suspension C.

4 - On prépare une solution aqueuse d'urée à 14,4 g/litre, dont on ajoute progressivement 1,2 litres à la suspension C.

Le rapport molaire urée/$Al^{3+}$ est égal à 1,16.

En fin d'addition de l'urée, on a le mélange réactionnel D.

5 - On le chauffe alors sous agitation et à reflux pendant 5 heures.

La suspension est ensuite dialysée d'une manière classique à l'aide d'une membrane en hydroxyacétate de cellulose pour un poids moléculaire égal à 10.000 et plus.

On effectue la séparation de l'argile par filtration sur verre fritté n° 4.

6 - On sèche le produit séparé à l'étuve à 100°C pendant 24 heures puis on le calcine dans un four à moufle 2 heures à 350°C.

L'analyse de l'argile par diffraction aux rayons X révèle l'existence d'une raie $d_{001}$ à 1,8 nm, caractéristique du pontage aluminique : le sigle $d_{001}$ définit l'espacement basal qui est la somme de l'épaisseur d'un feuillet et de l'espacement interfoliaire.

## EXEMPLE 2

On reproduit l'exemple 1 à la seule différence que l'on supprime l'opération de dialyse.

Le spectre de diffraction RX de l'argile obtenue montre l'existence d'une raie $d_{001}$ à 1,4 nm.

En conclusion, l'opération de dialyse est souhaitable puisque sa suppression entraîne un affaissement de l'espacement basal.

## EXEMPLE 3

On reproduit l'exemple 1 aux différences que l'on modifie la quantité d'urée dans la suspension C et que l'on n'effectue pas l'opération de dialyse.

La solution d'urée est à 28,8 g/l d'où un rapport molaire urée/$Al^{3+}$ égal à 2,32.

Le spectre de diffraction RX de l'argile obtenue montre l'existence d'une raie $d_{001}$ à 1,8 nm, caractéristique du pontage aluminique.

## EXEMPLE 4

On reproduit l'exemple 3 à la seule différence que l'on effectue en plus l'opération de dialyse.

Le spectre de diffraction RX de l'argile obtenue montre l'existence d'une raie $d_{001}$ à 1,4 nm.

Par conséquent, l'opération de dialyse entraînant dans ce cas un affaissement de l'espacement basal, celle-ci ne s'avère donc pas souhaitable.

## Revendications

1 - Procédé de préparation d'une argile pontée caractérisé par le fait qu'il consiste à traiter thermiquement un milieu réactionnel comprenant l'argile en suspension aqueuse, au moins un sel d'un cation M et un composé qui fournit des ions $OH^-$ par décomposition hydrothermique dans les conditions réactionnelles, puis à séparer le produit obtenu.

2 - Procédé selon la revendication 1 caractérisé par le fait que l'argile est une argile du groupe des smectites ou des vermiculites.

3 - Procédé selon l'une des revendications 1 et 2 caractérisé par le fait que l'argile est la montmorillonite, la beidellite, l'hectorite.

4 - Procédé selon l'une des revendications 1 à 3 caractérisé par le fait que l'argile mise en oeuvre a subi un traitement préalable d'échange des cations calcium par des cations sodium.

5 - Procédé selon l'une des revendications 1 à 4 caractérisé par le fait que le cation M est tout cation qui a la propriété de s'hydrolyser dans une gamme de pH allant de 3,0 à 10,0, de préférence de 4,0 à 8,0.

6 - Procédé selon l'une des revendications 1 à 5 caractérisé par le fait que le cation M est un cation trivalent.

7 - Procédé selon la revendication 6 caractérisé par le fait que le cation M est l'aluminium, le chrome et/ou le fer ou leur mélange.

8 - Procédé selon l'une des revendications 6 et 7 caractérisé par le fait que le cation M est additionné d'une quantité minoritaire d'un cation bivalent.

9 - Procédé selon la revendication 8 caractérisé par le fait que le cation bivalent est le cobalt, le nickel, le cuivre, le zinc.

10 - Procédé selon l'une des revendications 1 à 9 caractérisé par le fait que le cation M est sous forme de nitrate ou de chlorure.

11 - Procédé selon l'une des revendications 1 à 10 caractérisé par le fait que le sel d'un cation M est le chlorvre d'aluminium et/ou de chrome, le nitrate d'aluminium et/ou de chrome.

12 - Procédé selon l'une des revendications 1 à 11 caractérisé par le fait que le sel d'un cation M est le chlorure d'aluminium ou le nitrate d'aluminium.

13 - Procédé selon l'un des revendications 1 à 12 caractérisé par le fait que le composé (AB) est l'urée, les urées substituées, la thiourée, les thiourées substituées, le cyanamide, les cyanamides substitués, l'hexaméthylènediamine, la mélamine.

14 - Procedé selon la revendication 13 caractérisé par le fait que le composé (AB) est l'urée.

15 - Procédé selon l'une des revendications 1 à 14 caractérisé par le fait que l'on peut mettre l'argile en suspension aqueuse, ajouter la solution aqueuse d'au moins un sel de cation M, puis la solution du composé (AB) ou inversement ; ou que l'on peut introduire la poudre d'argile dans une solution aqueuse d'au moins un sel de cation M et du composé (AB) ; ou que l'on mélange simultanément les trois réactifs.

16 - Procedé selon l'une des revendications 1 à 15 caractérisé par le fait que la concentration de l'argile dans le milieu réactionnel est comprise entre 0,1 g/l et 20 g/l.

17 - Procedé selon l'une des revendications 1 et 16 caractérisé par le fait que la concentration du composé (AB) dans le milieu réactionnel est comprise entre $10^{-3}$ et 2 moles/litre.

18 - Procédé selon l'une des revendications 1 à 17 caractérisé par le fait que le rapport pondéral entre le poids de sel de cation M exprimé en poids d'oxyde mis en oeuvre et le poids de l'argile mise en suspension est compris entre 0,1 et 6,0 et, de préférence, entre 1,0 et 5,0.

19 - Procédé selon l'une des revendications 1 à 18 caractérisé par le fait que le rapport molaire entre le nombre de moles du composé (AB) et le nombre de moles de cation M est compris entre 0,5 et 3,0.

20 - Procédé selon l'une des revendications 1 à 19 caractérisé par le fait que l'on effectue le mélange des réactifs et que l'on chauffe le milieu réactionnel entre 80°C et 120°C.

21 - Procédé selon l'une des revendications 1 à 20 caractérisé par le fait que l'on élimine les anions de l'argile obtenue après séparation.

22 - Procedé selon la revendication 21 caractérisé par le fait que l'élimination des anions est faite par lavage à l'eau ou par dialyse.

23 - Procédé selon l'une des revendications 1 à 22 caractérisé par le fait que l'argile est ensuite séchée entre 80°C et 120°C.

24 - Procédé selon l'une des revendications 1 à 22 caractérisé par le fait que l'argile est soumise à un traitement de lyophilisation.

25 - Procédé selon l'une des revendications 1 à 24 caractérisé par le fait que l'argile est ensuite calcinée à une température comprise entre 300°C et 800°C, de préférence, entre 350°C et 600°C.

26 - Argiles pontées obtenues selon le procédé décrit dans l'une des revendications 1 à 25.

27 - Argiles pontées selon la revendication 26 caractérisées par le fait qu'elles présentent un espacement basal entre 1,4 et 2,0 nm, dans le cas d'un pontage aluminique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 299 893 (RHONE POULENC CHIMIE) <br> * revendication 2 * | 1,26 | B 01 J <br> 29/02 |
| A | FR-A-2 394 324 (GRACE & CO) <br> * revendication 8 * | 1,26 | |
| A | US-A-4 742 033 (HARRIS et al.) <br> * revendication 1 * | 1,26 | |
| A | US-A-4 637 991 (BATTISTE et al.) <br> * revendication 1 * | 1,26 | |

DOMAINES TECHNIQUES
RECHERCHES (Int. Cl.5)

B 01 J 29/02
C 01 B 33/26

Le présent rapport de recherche a été établi pour toutes les revendications

| Lieu de la recherche | Date d'achèvement de la recherche | Examinateur |
|---|---|---|
| Berlin | 11 décembre 90 | CLEMENT J.P. |